# EUROPEAN PATENT APPLICATION

(11) **EP 4 823 144 A1**
(43) Date of publication of application: **14.10.2026**
(21) Application number: 23960582.7
(22) Date of filing: 08.12.2023
(51) Int. Cl.: H04W 24/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LIU, Wendong, Dongguan, Guangdong 523860 (CN); XIAO, Han, Dongguan, Guangdong 523860 (CN)
(74) Representative: RGTH
(86) International application number: PCT/CN2023/137450
(87) International publication number: WO 2025/118271

(57) **Abstract**

Provided are a wireless communication method and a communication device. The method comprises: a first device receives first information sent by a second device, the first information being used for adjusting first configuration information of the first device, and the first configuration information being used for configuring non-orthogonal transmission of a pilot signal and a target signal.

## Description

### TECHNICAL FIELD

This application relates to the field of communications technologies, and more specifically, to a wireless communication method and a communications device.

### BACKGROUND

To improve utilization of radio resources, a non-orthogonal transmission scheme for pilot signals and target signals (for example, data signals) is proposed in the related art. However, the current non-orthogonal transmission scheme is not mature enough and needs further improvement.

### SUMMARY

Embodiments of this application provide a wireless communication method and a communications device. The following describes in detail various aspects involved in embodiments of this application.

According to a first aspect, a wireless communication method is provided, including: receiving, by a first device, first information transmitted by a second device, where the first information is used to adjust first configuration information of the first device, and the first configuration information is used to configure non-orthogonal transmission of a pilot signal and a target signal.

According to a second aspect, a wireless communication method is provided, including: transmitting, by a second device, first information to a first device, where the first information is used to adjust first configuration information of the first device, and the first configuration information is used to configure non-orthogonal transmission of a pilot signal and a target signal.

According to a third aspect, a communications device is provided, where the communications device is a first device. The communications device includes: a first communications module, configured to receive first information transmitted by a second device, where the first information is used to adjust first configuration information of the first device, and the first configuration information is used to configure non-orthogonal transmission of a pilot signal and a target signal.

According to a fourth aspect, a communications device is provided, where the communications device includes a second device. The communications device includes: a first communications module, configured to transmit first information to a first device, where the first information is used to adjust first configuration information of the first device, and the first configuration information is used to configure non-orthogonal transmission of a pilot signal and a target signal.

According to a fifth aspect, a communications device is provided, including a transceiver, a memory, and a processor. The memory is configured to store a program, and the processor is configured to invoke the program in the memory, and control the transceiver to receive or transmit a signal, to cause the communications device to perform the method according to the first aspect or the second aspect.

According to a sixth aspect, an apparatus is provided, including a processor configured to invoke a program from a memory, to cause the apparatus to perform the method according to the first aspect or the second aspect.

According to a seventh aspect, a chip is provided, including a processor, configured to: invoke a program from a memory, to cause a device installed with the chip to execute the method according to the first aspect or the second aspect.

According to an eighth aspect, a computer-readable storage medium is provided, where the computer-readable storage medium stores a program, and the program causes a computer to execute the method according to the first aspect or the second aspect.

According to a ninth aspect, a computer program product is provided, including a program, where the program causes a computer to execute a method according to the first aspect or the second aspect.

According to a tenth aspect, a computer program is provided, where the computer program causes a computer to execute the method according to the first aspect or the second aspect.

In embodiments of this application, configuration information related to non-orthogonal transmission is dynamically adjusted based on feedback information (that is, first information) transmitted by a receive end device, so that non-orthogonal transmission can adapt to different transmission environments, thereby improving a system throughput.

### BRIEF DESCRIPTION OF DRAWINGS

FIG. 1 is an example diagram of a system architecture of a wireless communications system to which embodiments of this application are applicable.
FIG. 2 is a schematic diagram of a neuron to which an embodiment of this application is applicable.
FIG. 3 is a schematic diagram of a neural network to which an embodiment of this application is applicable.
FIG. 4 is a schematic diagram of a convolutional neural network to which an embodiment of this application is applicable.
FIG. 5 is a schematic diagram of a long short-term memory model to which an embodiment of this application is applicable.
FIG. 6 is a schematic diagram of an information transmitting and receiving procedure in a wireless communications system.
FIG. 7A is a schematic diagram of a channel estimation and recovery process in a wireless communications system.
FIG. 7B shows patterns of resource allocation of data signals and pilot signals under different configurations.
FIG. 8 is an example diagram of non-orthogonal transmission.
FIG. 9 is a schematic flowchart of a wireless communication method according to an embodiment of this application.
FIG. 10 is a schematic flowchart of a possible implementation of the method shown in FIG. 9.
FIG. 11 is a schematic flowchart of another possible implementation of the method shown in FIG. 9.
FIG. 12 is a schematic structural diagram of a communications device according to an embodiment of this application.
FIG. 13 is a schematic structural diagram of a communications device according to another embodiment of this application.
FIG. 14 is a schematic diagram of an apparatus to which an embodiment of this application is applicable.

### DESCRIPTION OF EMBODIMENTS

Technical solutions in this application are described below with reference to the accompanying drawings.

### Communications system architecture

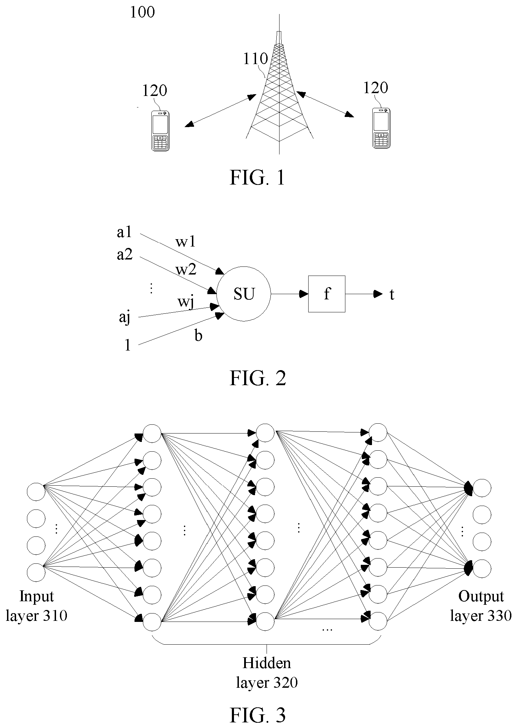

FIG. 1 is an example diagram of a system architecture of a wireless communications system 100 to which embodiments of this application may be applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 exemplarily shows one network device and one terminal device. Optionally, the wireless communications system 100 may include one or more network devices 110 and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and a specific device used by the network device are not limited in embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

It should be understood that all or some of functions of the communications device in this application may also be implemented by software functions running on hardware, or by virtualization functions instantiated on a platform (for example, a cloud platform).

### Neural network

In recent years, artificial intelligence research represented by a neural network has made great achievements in many fields, and will also play an important role in people's production and life for a long time to come. A neural network may be understood as an operation model including a plurality of neuron nodes that are connected, where a connection between nodes may represent a weighting value from an input signal to an output signal, which is generally referred to as a weight. Each node performs weighted summation on different input signals and outputs the signals by using a specific activation function.

Referring to FIG. 2, a neuron may implement nonlinear mapping based on an activation function, where an input of the neuron may be denoted as A, each dimension of the input is denoted as aⱼ, and a corresponding weight is denoted as wⱼ. The weight and a summation unit (summation unit, SU) together enhance or weaken the input. In addition, an output of the SU may be input into an activation function f to obtain an output t, where a value of j is 1, 2, ..., n.

Common neural networks include a convolutional neural network (convolutional neural network, CNN), a recurrent neural network (recurrent neural network, RNN), a deep neural network (deep neural network, DNN), and the like.

With reference to FIG. 3, the following describes a neural network to which embodiments of this application are applicable. The neural network shown in FIG. 3 may be divided into three types according to locations of different layers: an input layer 310, a hidden layer 320, and an output layer 330. Generally, the first layer is the input layer 310, the last layer is the output layer 330, and a middle layer between the first layer and the last layer is the hidden layer 320.

The input layer 310 is configured to input data, where the input data may be, for example, a received signal received by a receiver. The hidden layer 320 is configured to process the input data, for example, perform decompression processing on a received signal. The output layer 330 is configured to output processed output data, for example, output a decompressed signal.

As shown in FIG. 3, the neural network includes a plurality of layers, each layer includes a plurality of neurons, and neurons between layers may be fully connected, or may be partially connected. For connected neurons, an output of neurons of an upper layer may be used as an input of neurons of a lower layer.

With continuous development of neural network research, neural network deep learning algorithms are proposed in recent years. A relatively large quantity of hidden layers are introduced into a neural network to form a DNN. More hidden layers enable the DNN to better describe a complex situation in a real world. Theoretically, a model with more parameters has higher complexity and a larger "capacity", and means that the model can complete a more complex learning task. Such neural network models are widely used in pattern recognition, signal processing, optimization combination, anomaly detection, and the like.

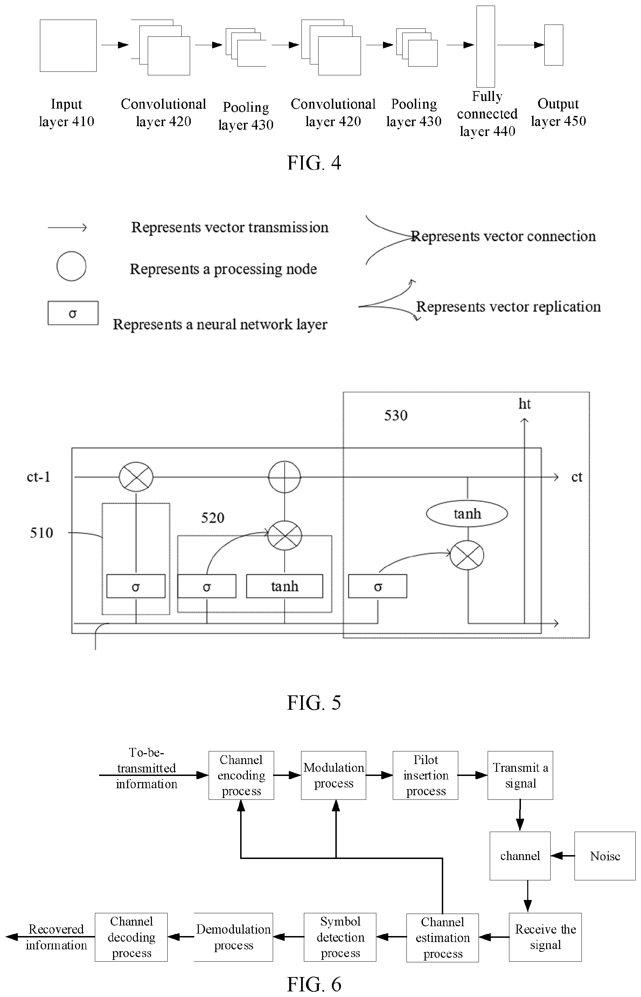

A CNN is a deep neural network with a convolutional structure. As shown in FIG. 4, the structure of the CNN may include an input layer 410, convolutional layers 420, pooling layers 430, a fully connected layer 440, and an output layer 450.

Each convolutional layer 420 may include a plurality of convolutional operators, and a convolutional operator is also referred to as a kernel. A function of the convolutional operator may be considered as a filter for extracting specific information from an input signal. The convolutional operator may essentially be a weight matrix, and the weight matrix is generally pre-defined.

Weight values in these weight matrices need to be obtained through massive training in actual application. Each weight matrix formed by using the weight values obtained through training may be used to extract information from the input signal, to help the CNN perform correct prediction.

When the CNN has a plurality of convolutional layers, a relatively large quantity of general features are usually extracted at an initial convolutional layer. The general feature may also be referred to as a low-level feature. As a depth of the CNN increases, a feature extracted at a later convolutional layer is more complex.

Pooling layer 430: A quantity of training parameters often needs to be reduced. Therefore, a pooling layer often needs to be periodically introduced after a convolutional layer. For example, one convolutional layer shown in FIG. 4 may be followed by one pooling layer, or a plurality of convolutional layers may be followed by one or more pooling layers. In a signal processing process, the only purpose of the pooling layer is to reduce a size of space occupied by extracted information.

Fully connected layer 440: After processing performed at the convolutional layer 420 and the pooling layer 430, the CNN is not ready to output required output information. As mentioned above, the convolutional layers 420 and the pooling layers 430 only extract features and reduce parameters brought by the input data. To generate the final output information (for example, a bitstream of original information transmitted by a transmit end), the CNN needs to use the fully connected layer 440. Generally, the fully connected layer 440 may include a plurality of hidden layers. Parameters included in the plurality of hidden layers may be obtained by performing pre-training according to related training data of a specific task type. For example, the task type may include decoding a data signal received by a receiver, and for another example, the task type may alternatively include performing channel estimation based on a pilot signal received by the receiver.

A layer behind the plurality of hidden layers in the fully connected layer 440, that is, the last layer of the entire CNN, is the output layer 450, which is configured to output a result. Generally, a loss function (for example, a loss function similar to a classification cross entropy) is set for the output layer 450, to calculate a prediction error, or in other words, to evaluate a degree of difference between the result (also referred to as a predicted value) output by the CNN model and an ideal result (also referred to as a true value).

To minimize the loss function, the CNN model needs to be trained. In some implementations, the backpropagation algorithm (backpropagation algorithm, BP) may be used to train the CNN model. A training process of the BP includes a forward propagation process and a backward propagation process. In the process of forward propagation (as shown in FIG. 4, propagation from 410 to 450 is forward propagation), the input data is input into the foregoing layers of the CNN model, processed layer by layer, and transmitted to the output layer. If an output result at the output layer differs significantly from a desired result, minimizing the loss function mentioned above is used as an optimization objective, and shifting to backpropagation (as shown in FIG. 4, the propagation from 450 to 410 is backpropagation) is performed. Partial derivatives of the optimization objective with respect to the weights of each neuron are calculated layer by layer to form a gradient of the optimization objective with respect to a weight vector, which serves as a basis for modifying model weights. A training process of the CNN is completed during a weight modification process. When the foregoing error reaches an expected value, the training process of the CNN ends.

It should be noted that the CNN shown in FIG. 4 is merely an example of a convolutional neural network. In specific application, the convolutional neural network may also exist in the form of another network model, which is not limited in embodiments of this application.

An objective of an RNN is to process sequence data. In a conventional neural network model (for example, the CNN model), from an input layer to hidden layers and then to an output layer, different types of layers are fully connected, but layers of the same type are not connected. This common neural network cannot resolve many problems. For example, to predict a next word in a sentence, words before this word are generally used because words in a sentence are not independent of each other. A reason why the RNN is named a recurrent neural network is that a current output of a sequence is also related to a previous output, which is specifically characterized in that the network memorizes previous information and applies the information to calculation of a current output, that is, nodes between hidden layers are no longer connectionless but connected, and an input of a hidden layer includes not only an output of the input layer but also an output of the hidden layer at a previous instant. Theoretically, the RNN can process sequence data of any length.

Training for the RNN is similar to that for a conventional ANN (artificial neural network). A BP error backpropagation algorithm is also used, but there is a difference, which lies in that, if RNNs are unfolded, parameters W, U, and V are shared, but this is not the case in a conventional neural network. In addition, in a gradient descent algorithm, an output of each step depends on not only a network of a current step, but also a status of the network in previous several steps. For example, when t = 4, the training process is transferred backward by three steps, and various gradients in the backward three steps need to be added. This learning algorithm is referred to as backpropagation through time (back propagation through time, BPTT).

Since an artificial neural network and a convolutional neural network already exist, why is a recurrent neural network required? The reason is quite simple. Prerequisite assumptions of the convolutional neural network and the artificial neural network are both: elements are independent of each other, and an input and an output are also independent of each other, for example, a cat and a dog. However, in the real world, many elements are connected. For example, stocks change with time. One person says, "I like to travel. Yunnan is my favorite place, and I will go to __ if I have time." Everyone should know that "Yunnan" needs to be filled in the blank here, because this can be inferred from the context. However, it is difficult for a machine to do so. Consequently, a current recurrent neural network emerges. An essence of the recurrent neural network is having an ability to remember like a human being. Therefore, an output of the recurrent neural network depends on a current input and a memory.

Currently, to resolve problems of the RNN such as gradient explosion or disappearance, a long short-term memory (long short-term memory, LSTM) model is obtained through transformation based on the RNN. Referring to FIG. 5, the LSTM introduces a new memory unit cₜ (also referred to as "cell state (cell state)"), used for linear cyclic information transfer and outputting information to an external state ht of the hidden layer. At each instant t, cₜ records historical information up to a current instant. Unlike the RNN, in which only the most recent state is considered, the memory unit determines which states should be maintained and which states should be forgotten, thereby resolving a defect of a conventional RNN in long-term memory.

Still referring to FIG. 5, to implement the foregoing state selection, a gate control mechanism is introduced into the memory unit, to control a path of information transfer, which is similar to a gate in a data circuit, where "0" indicates disabled, and "1" indicates enabled. The memory unit includes a forgetting gate 510, an input gate 520, and an output gate 530. The forget gate is used to control how much information is required to be forgotten from the memory unit cₜ₋₁ at a previous instant, the input gate is used to control how much information in a candidate state $\hat{{c}_{t}}$ at a current instant is required to be stored, and the output gate is used to control how much information at the current instant is required to be output from the memory unit cₜ to the external state hₜ.

### Process of transmitting and receiving wireless signals

In a wireless communications system, a process of transmitting and receiving information may generally include the steps shown in FIG. 6. Referring to FIG. 6, at a transmit end, a transmitter encodes and modulates a source bit stream (including to-be-transmitted information) to obtain a modulated symbol. Then, a pilot signal may be inserted into the modulated symbol. The pilot signal may be used for channel estimation and/or symbol detection at a receive end. After the pilot signal is inserted, a final transmit signal is formed. The transmit signal arrives at the receive end through a radio channel. At the receive end, a receiver first performs channel estimation by using the pilot signal. Then, channel state information (channel state information, CSI) may be fed back to the transmit end by using a feedback link, so that the transmitter adjusts channel coding, modulation precoding, and other modes. Finally, the receiver obtains a recovered bit stream (including recovered information) by performing steps such as symbol detection, demodulation, and channel decoding. The process shown in FIG. 6 is merely a simple example. In addition to the process shown in FIG. 6, there may be another process in a communications system, such as processes of resource mapping, precoding, interference cancellation, and CSI measurement. These processes may be implemented by using independent modules. After the independent modules are integrated, a complete wireless communications system may be formed.

### Channel estimation and pilot resource allocation

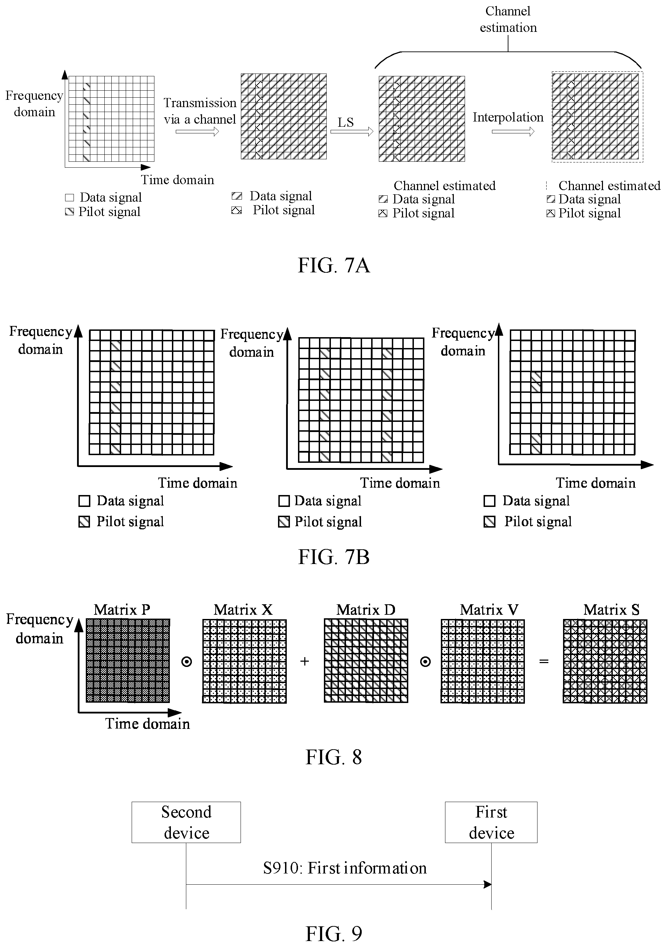

Due to complexity and time-varying of a radio channel environment, in the foregoing wireless communications system, estimation and recovery of a radio channel by the receiver directly affect final data recovery performance. A process of channel estimation and recovery in a current communications system is shown in FIG. 7A. Referring to FIG. 7A, one physical resource block (physical resource block, PRB) includes a plurality of resource elements (resource element, RE). The transmitter allocates, on different REs of the PRB, data signals and specific pilot signals known to the receiver, for example, channel state information reference signals (channel state information reference signal, CSI-RS) and demodulation reference signals (demodulation reference signal, DMRS). For a channel estimation phase, the receiver may estimate channel information at a pilot position by using a least squares (least square, LS) method based on an actual pilot signal and a received pilot signal. Then, the receiver recovers channel information on an entire PRB by using an interpolation algorithm based on channel information estimated by using the pilot location. The channel information may be used for subsequent CSI feedback or data recovery.

In some communications systems (for example, 5G NR), a data signal and a pilot signal are placed on different REs. FIG. 7B shows several patterns of resource allocation of data signals and pilot signals under different configurations. It may be learned from FIG. 7B that, on a time, frequency, or code domain resource, a data signal and a pilot signal are orthogonal to each other, that is, only a data signal or a pilot signal can be placed at a same RE. Because an RE that transmits a pilot signal cannot be used to transmit a data signal, system bandwidth is wasted.

Different wireless environments require different pilot densities. For example, when a moving speed of a terminal device is relatively high, time-varying of a channel characteristic is relatively fast. Therefore, denser pilot signals need to be placed in a time domain dimension to ensure channel estimation quality. Higher density of pilot signals means that more time-frequency resources cannot be used for data signal transmission, which further aggravates a waste of system bandwidth.

### Non-orthogonal transmission scheme of pilot signals and target signals

A non-orthogonal transmission scheme of pilot signals and target signals can alleviate the foregoing problem of system bandwidth waste. The following describes the transmission scheme. Non-orthogonal transmission of a pilot signal and a target signal means that two different signals (one of which is a pilot signal) occupy a same time-frequency resource for transmission. Therefore, this non-orthogonal transmission scheme may also be referred to as a non-orthogonal superimposed pilot scheme. Non-orthogonal transmission of a pilot signal and a target signal may refer to non-orthogonal transmission of a pilot signal and a data signal, non-orthogonal transmission of a pilot signal and a control signal, or non-orthogonal transmission of two different types of pilot signals.

For example, it is assumed that a system allocates a resource unit (which can be 1 PRB, 1 subband, a plurality of consecutive PRBs, or a plurality of consecutive subbands) being N subcarriers × M time-domain orthogonal frequency division multiplexing (orthogonal frequency division multiplexing, OFDM) symbols, and a data matrix D and a pilot matrix P are transmitted on this resource unit. The data matrix D ∈ *Q*^{*N*×*M*}, and the pilot matrix P ∈ *P*^{*N*×*M*}, where Q represents a data signal set, and P represents a pilot signal set. As shown in FIG. 8, linear superposition of the data matrix D and the pilot matrix P may be represented by using the following formula: $S = V ⊙ D + X ⊙ P$

Herein, S ∈ *C*^{*N*×*M*} is a superimposed signal, C represents a complex set, a data weight matrix $V = \sqrt{A} ∈ {\left[0, 1\right]}^{N \times M}$, a pilot weight matrix $X = \sqrt{1 - A} ∈ {\left[0, 1\right]}^{N \times M}$, *A* ∈ [0,1]^{*N*×*M*}, $\sqrt{⋅}$ represents square root calculation, and ⊙ represents Hadmar product.

When a size of the resource unit allocated by the system changes, the weight matrix, the data matrix, and the pilot matrix also change accordingly in same dimensions. The non-orthogonal transmission scheme supplements the receiving end with an AI receiver to jointly perform channel estimation and/or symbol detection on a received superimposed signal. In addition, the pilot weight matrix X, the data weight matrix V, and the matrix A are in a one-to-one correspondence. That is, once X is fixed, the matrices V and A are fixed accordingly. In non-orthogonal transmission, a pattern refers to a pattern of the matrix X, V, or A. It should be noted that patterns of X are in one-to-one correspondence with patterns of V and patterns of A.

Both the data weight matrix and the pilot weight matrix mentioned above are associated with the matrix A. In other words, based on the matrix A, different power allocations are actually implemented for a pilot signal and a data signal on a same time-frequency resource. When the matrix A is consistent on an entire time-frequency resource, it may be considered that a same power ratio between a pilot signal and a data signal is used at all time-frequency resource locations. When the matrix A is inconsistent on an entire time-frequency resource, it may be considered that different power ratios between a pilot signal and a data signal are used at different time-frequency resource locations, thereby forming different power patterns. It should be further noted that the matrix A may be preset, or may be obtained through training by using an AI/ML model.

It may be learned from the foregoing description that, in a conventional wireless communications system, a conventional linear receiver encounters a performance bottleneck in terms of bit error rate and throughput rate. Especially, in a high-speed moving scenario or a relatively severe multipath fading scenario, accuracy of interpolation-based channel estimation further degrades. Although the AI/ML receiver exhibits a performance gain of channel estimation and data demodulation compared with a conventional receiver, a reference signal needs to occupy a fixed time-frequency resource due to overheads of the reference signal. Therefore, system throughput still has a performance bottleneck. In addition, different reference signal configurations may require separate training of different AI/ML models. If an AI/ML model that does not match a reference signal configuration is used, channel estimation performance deteriorates or even signal detection fails. Therefore, after an AI/ML technology is introduced, a signal transmission manner of a conventional wireless communications system needs to be redesigned.

The non-orthogonal transmission scheme can be used to resolve a problem caused by reference signal overheads mentioned above. In the non-orthogonal transmission scheme, in a same time-frequency resource, a reference signal and a data signal are superimposed on each other. Therefore, extra overheads caused by a reference signal can be avoided, thereby improving a system throughput. In addition, deploying, in the receiver, an AI/ML receiver matching non-orthogonal transmission of the transmitter can improve link performance in terms of bit error rate and block error rate. However, a current non-orthogonal transmission scheme is not mature enough in some aspects and needs further improvement. For example, in a non-orthogonal transmission system, a power ratio at which a pilot signal and a data signal are superimposed on a same time-frequency resource is a key parameter. If the power ratio is a trainable parameter, an AI/ML model may need to be deployed on both a network device side and a terminal device side, to implement power ratio training. This dual-end structure significantly increases training and management complexity of the AI/ML model. If the power ratio is not trainable, the non-orthogonal transmission manner cannot be adjusted based on an instantaneous characteristic of a radio channel, and therefore link performance deteriorates. Particularly, in a multi-layer transmission process, how to dynamically adjust multi-layer non-orthogonal transmission based on a change of a radio channel environment to improve a system throughput is a problem needing to be solved.

To solve the foregoing problem, an embodiment of this application proposes that a second device (which refers to a receive end device of non-orthogonal transmission) feeds back first information to a first device (which refers to a transmit end device of non-orthogonal transmission) (refer to step S910 in FIG. 9), so that the first device can dynamically adjust non-orthogonal transmission related configuration information based on the first information. For example, the first device may flexibly adjust a power ratio between a pilot signal and a target signal based on the first information. Flexible adjustment of non-orthogonal transmission related configuration information helps a non-orthogonal transmission process to adapt to different radio channel environments, thereby improving a system throughput.

The non-orthogonal transmission related configuration information mentioned above may be used to configure non-orthogonal transmission of a pilot signal and a target signal. For ease of description, the non-orthogonal transmission related configuration information is referred to as first configuration information below.

Content of the first configuration information is not specifically limited in embodiments of this application, and may include any type of information related to non-orthogonal transmission. In some implementations, the first configuration information is associated with one or more of the following: a transport layer used by the first device, or powers of a pilot signal and a target signal (for example, a power ratio between them).

For example, the first configuration information indicates a quantity of transport layers supported or used by the first device. For example, the first configuration information includes an information field 1, and a value of the information field 1 is N (N is a positive integer greater than or equal to 1), which indicates that the quantity of transport layers supported or used by the first device is N.

For another example, the first configuration information indicates whether the first device uses non-orthogonal transmission. Alternatively, the first configuration information indicates whether non-orthogonal transmission is used at the N transport layers. For example, the first configuration information may be that the first device uses non-orthogonal transmission or does not use non-orthogonal transmission, all N transport layers use non-orthogonal transmission, none of the N transport layers uses orthogonal transmission, or some of the N transport layers use non-orthogonal transmission and some of the N transport layers use orthogonal transmission (that is, a pilot signal and a target signal occupy different time-frequency resources).

For another example, the first configuration information may indicate whether the N transport layers use a same power ratio between a pilot signal and a target signal (a power ratio for short below). In an example, the first configuration information may include an information field 2. If a value of the information field 2 is a first value (for example, 1), it indicates that the N transport layers use a same power ratio. If the value of the information field is a second value (for example, 0), it indicates that the N transport layers do not use a same power ratio. In another example, the first configuration information may implicitly indicate whether the N transport layers use a same power ratio. For example, if the first configuration information indicates a power ratio corresponding to only one of the N transport layers, it indicates that the N transport layers use a same power ratio. If the first configuration information separately indicates N power ratios corresponding to the N transport layers, it indicates that power ratios used by the N transport layers may be different.

For another example, the first configuration information may indicate a power ratio between a pilot signal and a target signal in the N transport layers. Power ratios of different transport layers may be the same or may be different. When a same power ratio is used across different transport layers, the power ratio may be denoted as α; when different power ratios are used across different transport layers, the power ratio may be denoted as αₙ, 1 ≤ *n* ≤ *N*. Certainly, optionally, if different time-frequency resources at a same transport layer also use different power ratios, the first configuration information may further indicate power ratios corresponding to the different time-frequency resources at the same transport layer.

The first information mentioned above may be used to indicate a channel state between the first device and the second device. For example, the first device is a network device, and the second device is a terminal device; in this case, the first information may be used to indicate a downlink channel state between the network device and the terminal device. For example, the first device is a terminal device, and the second device is a network device; in this case, the first information may be used to indicate an uplink channel state between the network device and the terminal device. That is, the first configuration information may be adjusted (dynamically adjusted) based on the channel state between the first device and the second device, to adapt the non-orthogonal transmission manner to a current channel environment, thereby helping the receiver obtain better signal receiving performance.

Alternatively, in some other implementations, the first information may be used to indicate the first configuration information. In other words, the receive end device may directly indicate, to the transmit end device, the first configuration information that needs to be used, so that the transmit end device performs non-orthogonal transmission according to a requirement of the receive end device. In this implementation, the first information may be determined based on channel state information between the first device and the second device (the channel state information may be determined based on measurement of a reference signal).

For ease of understanding, the following describes the solution shown in FIG. 9 in more detail with reference to Embodiment 1 and Embodiment 2. In Embodiment 1, the first device is a network device, and the second device is a terminal device. In Embodiment 2, the first device is a terminal device, and the second device is a network device.

### Embodiment 1: Downlink non-orthogonal transmission between a network device and a terminal device

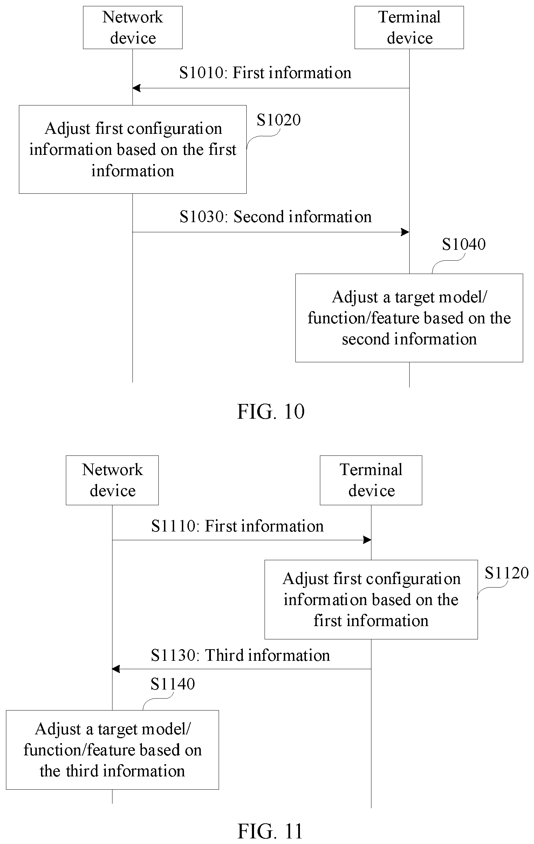

Refer to FIG. 10. Step S1010: A network device receives first information transmitted by a terminal device. The first information may be used to indicate or feed back a downlink channel state between the network device and the terminal device. Therefore, the first information in Embodiment 1 may also be referred to as first feedback information.

The first information may include, for example, one or more of the following: a rank indicator (rank indicator, RI), a channel quality indicator (channel quality indication, CQI), a signal-to-noise ratio (signal to noise Ratio, SNR), or a signal-to-interference-noise ratio (signal to interference plus noise ratio, SINR). For example, if the network device uses N transport layers, the terminal device may feed back, by using the first information, the RI and a CQI/SNR/SINR corresponding to each transport layer.

After receiving the first information, in some implementations, the network device adjusts first configuration information based on the first information (step S1020). For example, the network device may adjust a power ratio between a pilot signal and a target signal based on the first information. In a more specific example, it is assumed that the first information includes a CQI/SNR/SINR corresponding to each of the N transport layers. If a CQI/SNR/SINR corresponding to transport layer a is less than or equal to a first threshold, to ensure performance of implicit channel estimation by a target model (for channel estimation and/or signal detection based on a superimposed signal of a pilot signal and a target signal) deployed on the terminal device, the network device may improve a power ratio of transport layer a, so that a reference signal occupies a larger power proportion in a total transmit power. If the CQI/SNR/SINR corresponding to transport layer a is greater than the first threshold, the first device may reduce the power ratio of transport layer a.

Certainly, in some implementations, if the first information indicates that the downlink channel state between the network device and the terminal device does not obviously change, the network device may not adjust the first configuration information.

Still referring to FIG. 10, in some implementations, the network device may transmit second information to the terminal device (step S1030). The second information may indicate adjusted first configuration information. Transmitting the second information helps the terminal device enable the target model (for channel estimation and/or signal detection based on a superimposed signal of a pilot signal and a target signal) to match the adjusted first configuration information. Certainly, the target model deployed on the terminal device may have a generalization capability for different first configuration information. That is, when the first configuration information changes, the target model may still be used. In this case, the network device may alternatively not transmit the second information.

The second information may be used to indicate one or more types of information in the first configuration information.

In some implementations, the second information may be used to indicate a quantity N of transport layers used by the network device and/or whether non-orthogonal transmission is performed at the N transport layers. For example, the second information may include a first indication field (including one or more bits). When a value of the first indication field is a first value (for example, 1), it indicates that the N transport layers use non-orthogonal transmission; when a value of the first indication field is a second value (for example, 0), it indicates that the N transport layers use orthogonal transmission.

In some implementations, the second information may be used to indicate, when the N transport layers use non-orthogonal transmission, whether different layers of the N transport layers use a same power ratio between a reference signal and a target signal. For example, the second information may include a second indication field (including one or more bits). When a value of the second indication field is a first value (for example, 11), it indicates that the N transport layers use different power ratios; when a value of the second indication field is a second value (for example, 10), it indicates that the N transport layers use a same power ratio.

In some implementations, the second information may be used to indicate a power ratio between a reference signal and a target signal in each of the N transport layers. For example, the second information may include a first index. Different values of the first index may correspond to different power ratios. Table 1 below provides an example of a correspondence between a first index and a power ratio. If the second information indicates a first index corresponding to only one transport layer (for example, the first transport layer), the N transport layers may use a same power ratio by default. Otherwise, the second information may include a first index corresponding to each transport layer.

**Table 1 Correspondence between a first index and a power ratio**

| First index | Power ratio between a reference signal and a target signal |
|---|---|
| 0 | 0.5 |
| 1 | 0.2 |
| 2 | 0.1 |
| 3 | 0.01 |

A manner of carrying the second information is not specifically limited in embodiments of this application. For example, the network device may use one or a combination of more of the following to carry the second information: radio resource control (radio resource control, RRC), a medium access control control element (medium access control control element, MAC CE), and/or downlink control information (downlink control information, DCI). For another example, the network device may use other signaling dedicated to the target model to carry the second information.

Still referring to FIG. 10, in some implementations, the terminal device adjusts the target model based on the second information (step S1040). The adjustment mentioned herein may mean to "select", "switch", or "update". For example, it is assumed that a target model matching a first index of 0 (for description of the first index, refer to the foregoing description) is currently deployed on the terminal device; when the first index in the received second information is 1, the terminal device may select a target model matching a first index of 1. Alternatively, when the first index in the received second information is 1, the terminal device switches the target model to a configuration matching a first index of 1.

For example, the target signal is a data signal. Based on the solution provided in Embodiment 1, the network device may dynamically adjust configuration information (for example, a power ratio between a reference signal and a target signal) of non-orthogonal transmission of the network device in real time based on a current downlink radio channel environment, such that a power of a reference signal for channel estimation and/or data demodulation can be dynamically allocated. It may be learned that, in the solution provided in Embodiment 1, the non-orthogonal transmission manner of the network device is more adaptable to a current channel environment, thereby helping a receiver of the terminal device obtain better downlink channel estimation and/or data demodulation performance. In addition, the solution provided in Embodiment 1 does not require joint dual-end model training, and does not require complex configuration and signaling procedures. Therefore, the solution has relatively good flexibility and clear practical significance for deploying an AI-based non-orthogonal transmission scheme in an actual system.

In some implementations, the network device may receive first capability information transmitted by the terminal device. The first capability information is used to indicate that the terminal device supports downlink non-orthogonal transmission (for example, downlink AI-based multi-layer non-orthogonal transmission).

For example, the first capability information indicates that the terminal device has a capability of receiving the second information. A terminal device having this capability may also support the target model, and therefore may support downlink non-orthogonal transmission (for example, downlink AI-based multi-layer non-orthogonal transmission).

For another example, the first capability information indicates that the terminal device has a capability of supporting the target model. A terminal device having this capability may also support reception of the second information, and therefore may support downlink non-orthogonal transmission (for example, downlink AI-based multi-layer non-orthogonal transmission).

### Embodiment 2: Uplink non-orthogonal transmission between a network device and a terminal device

Referring to FIG. 11, a network device transmits first information to a terminal device (step S1110). In Embodiment 2, the network device may deploy a target model. Before transmitting the first information, the network device may first measure an uplink reference signal, to determine uplink channel quality and an allowable quantity of transport layers. Then, the network device may transmit the first information to the terminal device based on the uplink channel quality and the allowable quantity of transport layers.

The first information may be used to indicate one or more types of information in first configuration information.

In some implementations, the first information may be used to indicate a quantity N of transport layers used by the terminal device and/or whether non-orthogonal transmission is performed at the N transport layers. For example, the first information may include a first indication field (including one or more bits). When a value of the first indication field is a first value (for example, 1), it indicates that the N transport layers use non-orthogonal transmission; when a value of the first indication field is a second value (for example, 0), it indicates that the N transport layers use orthogonal transmission.

In some implementations, the first information may be used to indicate, when the N transport layers use non-orthogonal transmission, whether different layers of the N transport layers use a same power ratio between a reference signal and a target signal. For example, the first information may include a second indication field (including one or more bits). When a value of the second indication field is a first value (for example, 11), it indicates that the N transport layers use different power ratios; when a value of the second indication field is a second value (for example, 10), it indicates that the N transport layers use a same power ratio.

In some implementations, the first information may be used to indicate a power ratio between a reference signal and a target signal in each of the N transport layers. For example, the first information includes a first index. Different values of the first index may correspond to different power ratios. Table 2 below provides an example of a correspondence between a first index and a power ratio. If the first information indicates a first index corresponding to only one transport layer (for example, the first transport layer), it may indicate that all the N transport layers use a same power ratio. Otherwise, the first information may include a first index corresponding to each transport layer.

**Table 2 Correspondence between a first index and a power ratio**

| First index | Power ratio between a reference signal and a target signal |
|---|---|
| 0 | 0.5 |
| 1 | 0.2 |
| 2 | 0.1 |
| 3 | 0.01 |

A manner of carrying the first information is not specifically limited in embodiments of this application. For example, the network device may use one or a combination of more of the following to carry the first information: RRC, a MAC CE, and/or DCI. For another example, the network device may use other signaling dedicated to the target model to carry the first information.

It should be understood that content of the first information in Embodiment 2 is similar to content of the second information in Embodiment 1, and is also used to indicate the first configuration information. However, it should be noted that the second information in Embodiment 1 indicates the first configuration information used by the network device during downlink transmission. Different from the second information, the first information in Embodiment 2 indicates first configuration information that should be used by the terminal device during uplink transmission. Because the first information and the second information have different functions, they are carried in different signaling or indication fields.

Still referring to FIG. 11, after receiving the first information, the terminal device may adjust the first configuration information based on the first information (step S1120). For content of the first configuration information, refer to the foregoing description. Details are not described herein again. It should be noted that step S1120 is an optional step. The terminal device may choose to adjust the first configuration information based on the first information, or may continue to perform transmission based on the current first configuration information. Alternatively, assuming that the terminal device can implement only orthogonal transmission due to a capability limitation of the terminal device (that is, a pilot signal and a target signal occupy different time-frequency resources), even if the terminal device receives the first information, the terminal device may ignore the first information, and continue to perform uplink transmission based on the orthogonal transmission manner.

Referring to FIG. 11, in some implementations, after receiving the first information, the terminal device transmits third information to the network device (step S1130). The third information is used to indicate that the first device has adjusted the first configuration information of the terminal device based on the first information. For example, the third information includes one bit. If a value of the bit is 1, it indicates that the terminal device has updated the first configuration information based on the first information transmitted by the network device. If a value of the bit is 0, it indicates that the terminal device cannot support the first configuration information indicated by the first information, and therefore the terminal device keeps the current first configuration information unchanged.

Referring to FIG. 11, in some implementations, the network device adjusts the target model based on the third information (step S1140). For example, if the terminal device has updated the first configuration information based on the first information transmitted by the network device, the network device selects, switches, or updates the target model based on the updated first configuration information. If the terminal device has not updated the first configuration information based on the first information transmitted by the network device, the network device may keep the target model unchanged.

For example, the target signal is a data signal. Based on the solution provided in Embodiment 2, the network device may dynamically adjust, in real time based on a current uplink radio channel environment, a power ratio between a reference signal and a data signal transmitted by the terminal device, to adapt a power of the reference signal to the radio channel environment. It may be learned that, in the solution provided in Embodiment 2, the non-orthogonal transmission manner of the terminal device can be better adapted to the current channel environment, thereby helping a receiver of the network device obtain better uplink channel estimation and/or data demodulation performance. In addition, the solution provided in Embodiment 2 does not require joint dual-end model training, and does not require complex configuration and signaling procedures. Therefore, the solution has relatively good flexibility and clear practical significance for deploying an AI-based non-orthogonal transmission scheme in an actual system.

In some implementations, the terminal device transmits second capability information to the network device. The second capability information is used to indicate that the terminal device supports uplink non-orthogonal transmission (for example, uplink AI-based multi-layer non-orthogonal transmission).

For example, the second capability information indicates that the terminal device has a capability of receiving the first information. A terminal device having this capability may also support the first configuration information, and therefore may support uplink non-orthogonal transmission (for example, uplink AI-based multi-layer non-orthogonal transmission).

For another example, the second capability information indicates that the terminal device has a capability of supporting the first configuration information. A terminal device having this capability may also support reception of the first information, and therefore may support downlink non-orthogonal transmission (for example, downlink AI-based multi-layer non-orthogonal transmission).

In some implementations, the target model mentioned above may also be referred to as or replaced with a target function. The target function refers to a function of performing channel estimation and/or signal detection based on a superimposed signal of a pilot signal and a target signal.

In some implementations, the target model or target function mentioned above may also be referred to as or replaced with a target feature. The target feature refers to a feature of performing channel estimation and/or signal detection based on a superimposed signal of a pilot signal and a target signal.

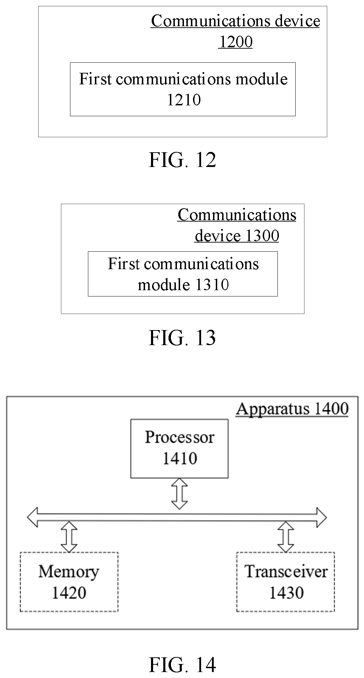

The method embodiments of this application are described above in detail with reference to FIG. 1 to FIG. 11. Apparatus embodiments of this application are described below in detail with reference to FIG. 12 to FIG. 14. It should be understood that the descriptions of the method embodiments correspond to descriptions of the apparatus embodiments, and therefore, for parts that are not described in detail, reference may be made to the foregoing method embodiments.

FIG. 12 is a schematic structural diagram of a communications device according to an embodiment of this application. A communications device 1200 shown in FIG. 12 may be the first device mentioned above. The communications device 1200 includes a first communications module 1210. The first communications module 1210 is configured to receive first information transmitted by a second device, where the first information is used to adjust first configuration information of the first device, and the first configuration information is used to configure non-orthogonal transmission of a pilot signal and a target signal.

In some implementations, the first configuration information is associated with one or more of the following information: one or more transport layers used by the first device; or a power ratio between the pilot signal and the target signal.

In some implementations, the first configuration information is used to indicate one or more of the following information: a quantity of the one or more transport layers; whether the one or more transport layers use the non-orthogonal transmission; whether the one or more transport layers use a same power ratio between a pilot signal and a target signal; or a power ratio between a pilot signal and a target signal in the one or more transport layers.

In some implementations, the first device is a network device, and the second device is a terminal device.

In some implementations, the first information is used to indicate a downlink channel state between the first device and the second device.

In some implementations, the first information includes one or more of the following: an RI, a CQI, an SNR, or an SINR.

In some implementations, the communications device 1200 further includes:
a second communications module, configured to transmit second information to the second device, where the second information is used to indicate the first configuration information.

In some implementations, the communications device further includes:
a third communications module, configured to receive first capability information transmitted by the second device, where the first capability information is used to indicate that the second device supports one or more of the following:
reception of the second information; or
a target model,
where the target model is used to perform channel estimation and/or signal detection based on a superimposed signal of the pilot signal and the target signal.

In some implementations, the first device is a terminal device, and the second device is a network device.

In some implementations, the first information is used to indicate the first configuration information.

In some implementations, the communications device further includes:
a fourth communications module, configured to transmit third information to the second device, where the third information is used to indicate that the first device has adjusted the first configuration information based on the first information.

In some implementations, the communications device further includes:
a fifth communications module, configured to transmit second capability information to the second device, where the second capability information is used to indicate that the first device supports one or more of the following:
reception of the first information; or
the first configuration information.

In some implementations, the communications device further includes:
an adjustment module, configured to adjust the first configuration information based on the first information.

In some implementations, the adjustment module is configured to:
adjust the power ratio between the pilot signal and the target signal based on the first information.

In some implementations, the first information is determined based on measurement of a reference signal.

In some implementations, the target signal is a data signal.

FIG. 13 is a schematic structural diagram of a communications device according to another embodiment of this application. A communications device 1300 shown in FIG. 13 may be the second device mentioned above. The communications device 1300 includes a first communications module 1310. The first communications module 1310 is configured to transmit first information to a first device, where the first information is used to adjust first configuration information of the first device, and the first configuration information is used to configure non-orthogonal transmission of a pilot signal and a target signal.

In some implementations, the first configuration information is associated with one or more of the following information:
one or more transport layers used by the first device; or
a power ratio between the pilot signal and the target signal.

In some implementations, the first configuration information is used to indicate one or more of the following information:
a quantity of the one or more transport layers;
whether the one or more transport layers use the non-orthogonal transmission;
whether the one or more transport layers use a same power ratio between a pilot signal and a target signal; or
a power ratio between a pilot signal and a target signal in the one or more transport layers.

In some implementations, the first device is a network device, and the second device is a terminal device.

In some implementations, the first information is used to indicate a downlink channel state between the first device and the second device.

In some implementations, the first information includes one or more of the following: an RI, a CQI, an SNR, or an SINR.

In some implementations, the communications device further includes:
a second communications module, configured to receive second information transmitted by the first device, where the second information is used to indicate the first configuration information.

In some implementations, the communications device further includes:
an adjustment module, configured to adjust a target model based on the second information, where the target model is used to perform channel estimation and/or signal detection based on a superimposed signal of the pilot signal and the target signal.

In some implementations, the communications device further includes:
a third communications module, configured to transmit first capability information to the first device, where the first capability information is used to indicate that the second device supports one or more of the following:
reception of the second information; or
the target model,
where the target model is used to perform channel estimation and/or signal detection based on a superimposed signal of the pilot signal and the target signal.

In some implementations, the first device is a terminal device, and the second device is a network device.

In some implementations, the first information is used to indicate the first configuration information.

In some implementations, the communications device further includes:
a fourth communications module, configured to receive third information transmitted by the first device, where the third information is used to indicate that the first device has adjusted the first configuration information based on the first information.

In some implementations, the communications device further includes:
a fifth communications module, configured to adjust a target model based on the third information, where the target model is used to perform channel estimation and/or signal detection based on a superimposed signal of the pilot signal and the target signal.

In some implementations, the communications device further includes:
a sixth communications module, configured to receive second capability information transmitted by the first device, where the second capability information is used to indicate that the first device supports one or more of the following:
reception of the first information; or
the first configuration information.

In some implementations, the first information is determined based on measurement of a reference signal.

In some implementations, the target signal is a data signal.

FIG. 14 is a schematic structural diagram of an apparatus according to an embodiment of this application. Dashed lines in FIG. 14 indicate that a unit or module is optional. The apparatus 1400 may be configured to implement the methods described in the foregoing method embodiments. The apparatus 1400 may be a chip, a terminal device, or a network device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program, where the program may be executed by the processor 1410, to cause the processor 1410 to execute the method described in the foregoing method embodiment. The memory 1420 may be separate from the processor 1410 or may be integrated into the processor 1410.

The apparatus 1400 may further include a transceiver 1430. The processor 1410 may communicate with another device or chip through the transceiver 1430. For example, the processor 1410 may transmit data to and receive data from another device or chip through the transceiver 1430.

An embodiment of this application further provides a computer-readable storage medium for storing a program. The computer-readable storage medium may be applied to the communications device provided in embodiments of this application, and the program causes a computer to execute the method executed by the terminal device or the network device in various embodiments of this application.

An embodiment of this application further provides a computer program product. The computer program product includes a program. The computer program product may be applied to the communications device provided in embodiments of this application, and the program causes a computer to execute the methods executed by the terminal device or the network device in various embodiments of this application.

An embodiment of this application further provides a computer program. The computer program may be applied to the communications device provided in the embodiments of this application, and the computer program causes a computer to execute the methods performed by the terminal device or the network device in various embodiments of this application.

It should be understood that the terms "system" and "network" in this application may be used interchangeably. In addition, the terms used in this application are merely used to explain specific embodiments of this application, and are not intended to limit this application. In the specification, claims, and accompanying drawings of this application, the terms "first", "second", "third", "fourth", and so on are intended to distinguish between different objects but do not describe a particular order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communication field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a first device, first information transmitted by a second device, wherein the first information is used to adjust first configuration information of the first device, and the first configuration information is used to configure non-orthogonal transmission of a pilot signal and a target signal.

2. The method according to claim 1, wherein the first configuration information is associated with one or more of following information:
one or more transport layers used by the first device; or
a power ratio between the pilot signal and the target signal.

3. The method according to claim 2, wherein the first configuration information is used to indicate one or more of following information:
a quantity of the one or more transport layers;
whether the one or more transport layers use the non-orthogonal transmission;
whether the one or more transport layers use a same power ratio between a pilot signal and a target signal; or
a power ratio between a pilot signal and a target signal in the one or more transport layers.

4. The method according to any one of claims 1 to 3, wherein the first device is a network device, and the second device is a terminal device.

5. The method according to claim 4, wherein the first information is used to indicate a downlink channel state between the first device and the second device.

6. The method according to claim 5, wherein the first information comprises one or more of following: a rank indicator RI, a channel quality indicator CQI, a signal-to-noise ratio SNR, or a signal-to-interference-noise ratio SINR.

7. The method according to any one of claims 4 to 6, wherein the method further comprises:
transmitting, by the first device, second information to the second device, wherein the second information is used to indicate the first configuration information.

8. The method according to any one of claims 4 to 7, wherein the method further comprises:
receiving, by the first device, first capability information transmitted by the second device, wherein the first capability information is used to indicate that the second device supports one or more of following:
reception of the second information; or
a target model,
wherein the target model is used to perform channel estimation and/or signal detection based on a superimposed signal of the pilot signal and the target signal.

9. The method according to any one of claims 1 to 3, wherein the first device is a terminal device, and the second device is a network device.

10. The method according to claim 9, wherein the first information is used to indicate the first configuration information.

11. The method according to claim 9 or 10, wherein the method further comprises:
transmitting, by the first device, third information to the second device, wherein the third information is used to indicate that the first device has adjusted the first configuration information based on the first information.

12. The method according to any one of claims 9 to 11, wherein the method further comprises:
transmitting, by the first device, second capability information to the second device, wherein the second capability information is used to indicate that the first device supports one or more of following:
reception of the first information; or
the first configuration information.

13. The method according to any one of claims 1 to 12, wherein the method further comprises:
adjusting, by the first device, the first configuration information based on the first information.

14. The method according to claim 13, wherein the adjusting, by the first device, the first configuration information based on the first information comprises:
adjusting, by the first device, the power ratio between the pilot signal and the target signal based on the first information.

15. The method according to any one of claims 1 to 14, wherein the first information is determined based on measurement of a reference signal.

16. The method according to any one of claims 1 to 15, wherein the target signal is a data signal.

17. A wireless communication method, comprising:
transmitting, by a second device, first information to a first device, wherein the first information is used to adjust first configuration information of the first device, and the first configuration information is used to configure non-orthogonal transmission of a pilot signal and a target signal.

18. The method according to claim 17, wherein the first configuration information is associated with one or more of following information:
one or more transport layers used by the first device; or
a power ratio between the pilot signal and the target signal.

19. The method according to claim 18, wherein the first configuration information is used to indicate one or more of following information:
a quantity of the one or more transport layers;
whether the one or more transport layers use the non-orthogonal transmission;
whether the one or more transport layers use a same power ratio between a pilot signal and a target signal; or
a power ratio between a pilot signal and a target signal in the one or more transport layers.

20. The method according to any one of claims 17 to 19, wherein the first device is a network device, and the second device is a terminal device.

21. The method according to claim 20, wherein the first information is used to indicate a downlink channel state between the first device and the second device.

22. The method according to claim 21, wherein the first information comprises one or more of following: a rank indicator RI, a channel quality indicator CQI, a signal-to-noise ratio SNR, or a signal-to-interference-noise ratio SINR.

23. The method according to any one of claims 20 to 22, wherein the method further comprises:
receiving, by the second device, second information transmitted by the first device, wherein the second information is used to indicate the first configuration information.

24. The method according to claim 23, wherein the method further comprises:
adjusting, by the second device, a target model based on the second information, wherein the target model is used to perform channel estimation and/or signal detection based on a superimposed signal of the pilot signal and the target signal.

25. The method according to any one of claims 20 to 24, wherein the method further comprises:
transmitting, by the second device, first capability information to the first device, wherein the first capability information is used to indicate that the second device supports one or more of following:
reception of the second information; or
the target model,
wherein the target model is used to perform channel estimation and/or signal detection based on a superimposed signal of the pilot signal and the target signal.

26. The method according to any one of claims 17 to 19, wherein the first device is a terminal device, and the second device is a network device.

27. The method according to claim 26, wherein the first information is used to indicate the first configuration information.

28. The method according to claim 26 or 27, wherein the method further comprises:
receiving, by the second device, third information transmitted by the first device, wherein the third information is used to indicate that the first device has adjusted the first configuration information based on the first information.

29. The method according to claim 28, wherein the method further comprises:
adjusting, by the second device, a target model based on the third information, wherein the target model is used to perform channel estimation and/or signal detection based on a superimposed signal of the pilot signal and the target signal.

30. The method according to any one of claims 26 to 29, wherein the method further comprises:
receiving, by the second device, second capability information transmitted by the first device, wherein the second capability information is used to indicate that the first device supports one or more of following:
reception of the first information; or
the first configuration information.

31. The method according to any one of claims 17 to 30, wherein the first information is determined based on measurement of a reference signal.

32. The method according to any one of claims 17 to 31, wherein the target signal is a data signal.

33. A communications device, wherein the communications device is a first device, and the communications device comprises:
a first communications module, configured to receive first information transmitted by a second device, wherein the first information is used to adjust first configuration information of the first device, and the first configuration information is used to configure non-orthogonal transmission of a pilot signal and a target signal.

34. The communications device according to claim 33, wherein the first configuration information is associated with one or more of following information:
one or more transport layers used by the first device; or
a power ratio between the pilot signal and the target signal.

35. The communications device according to claim 34, wherein the first configuration information is used to indicate one or more of following information:
a quantity of the one or more transport layers;
whether the one or more transport layers use the non-orthogonal transmission;
whether the one or more transport layers use a same power ratio between a pilot signal and a target signal; or
a power ratio between a pilot signal and a target signal in the one or more transport layers.

36. The communications device according to any one of claims 33 to 35, wherein the first device is a network device, and the second device is a terminal device.

37. The communications device according to claim 36, wherein the first information is used to indicate a downlink channel state between the first device and the second device.

38. The communications device according to claim 37, wherein the first information comprises one or more of following: a rank indicator RI, a channel quality indicator CQI, a signal-to-noise ratio SNR, or a signal-to-interference-noise ratio SINR.

39. The communications device according to any one of claims 36 to 38, further comprising:
a second communications module, configured to transmit second information to the second device, wherein the second information is used to indicate the first configuration information.

40. The communications device according to any one of claims 36 to 39, further comprising:
a third communications module, configured to receive first capability information transmitted by the second device, wherein the first capability information is used to indicate that the second device supports one or more of following:
reception of the second information; or
a target model,
wherein the target model is used to perform channel estimation and/or signal detection based on a superimposed signal of the pilot signal and the target signal.

41. The communications device according to any one of claims 33 to 35, wherein the first device is a terminal device, and the second device is a network device.

42. The communications device according to claim 41, wherein the first information is used to indicate the first configuration information.

43. The communications device according to claim 41 or 42, wherein the communications device further comprises:
a fourth communications module, configured to transmit third information to the second device, wherein the third information is used to indicate that the first device has adjusted the first configuration information based on the first information.

44. The communications device according to any one of claims 41 to 43, further comprising:
a fifth communications module, configured to transmit second capability information to the second device, wherein the second capability information is used to indicate that the first device supports one or more of following:
reception of the first information; or
the first configuration information.

45. The communications device according to any one of claims 33 to 44, further comprising:
an adjustment module, configured to adjust the first configuration information based on the first information.

46. The communications device according to claim 45, wherein the adjustment module is configured to:
adjust the power ratio between the pilot signal and the target signal based on the first information.

47. The communications device according to any one of claims 33 to 46, wherein the first information is determined based on measurement of a reference signal.

48. The communications device according to any one of claims 33 to 47, wherein the target signal is a data signal.

49. A communications device, wherein the communications device comprises a second device, and the communications device comprises:
a first communications module, configured to transmit first information to a first device, wherein the first information is used to adjust first configuration information of the first device, and the first configuration information is used to configure non-orthogonal transmission of a pilot signal and a target signal.

50. The communications device according to claim 49, wherein the first configuration information is associated with one or more of following information:
one or more transport layers used by the first device; or
a power ratio between the pilot signal and the target signal.

51. The communications device according to claim 50, wherein the first configuration information is used to indicate one or more of following information:
a quantity of the one or more transport layers;
whether the one or more transport layers use the non-orthogonal transmission;
whether the one or more transport layers use a same power ratio between a pilot signal and a target signal; or
a power ratio between a pilot signal and a target signal in the one or more transport layers.

52. The communications device according to any one of claims 49 to 51, wherein the first device is a network device, and the second device is a terminal device.

53. The communications device according to claim 52, wherein the first information is used to indicate a downlink channel state between the first device and the second device.

54. The communications device according to claim 53, wherein the first information comprises one or more of following: a rank indicator RI, a channel quality indicator CQI, a signal-to-noise ratio SNR, or a signal-to-interference-noise ratio SINR.

55. The communications device according to any one of claims 52 to 54, further comprising:
a second communications module, configured to receive second information transmitted by the first device, wherein the second information is used to indicate the first configuration information.

56. The communications device according to claim 55, wherein the communications device further comprises:
an adjustment module, configured to adjust a target model based on the second information, wherein the target model is used to perform channel estimation and/or signal detection based on a superimposed signal of the pilot signal and the target signal.

57. The communications device according to any one of claims 52 to 56, further comprising:
a third communications module, configured to transmit first capability information to the first device, wherein the first capability information is used to indicate that the second device supports one or more of following:
reception of the second information; or
the target model,
wherein the target model is used to perform channel estimation and/or signal detection based on a superimposed signal of the pilot signal and the target signal.

58. The communications device according to any one of claims 49 to 51, wherein the first device is a terminal device, and the second device is a network device.

59. The communications device according to claim 58, wherein the first information is used to indicate the first configuration information.

60. The communications device according to claim 58 or 59, wherein the communications device further comprises:
a fourth communications module, configured to receive third information transmitted by the first device, wherein the third information is used to indicate that the first device has adjusted the first configuration information based on the first information.

61. The communications device according to claim 60, wherein the communications device further comprises:
a fifth communications module, configured to adjust a target model based on the third information, wherein the target model is used to perform channel estimation and/or signal detection based on a superimposed signal of the pilot signal and the target signal.

62. The communications device according to any one of claims 58 to 61, further comprising:
a sixth communications module, configured to receive second capability information transmitted by the first device, wherein the second capability information is used to indicate that the first device supports one or more of following:
reception of the first information; or
the first configuration information.

63. The communications device according to any one of claims 49 to 62, wherein the first information is determined based on measurement of a reference signal.

64. The communications device according to any one of claims 49 to 63, wherein the target signal is a data signal.

65. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 16 or claims 17 to 32.

66. An apparatus, comprising a processor, configured to invoke a program from a memory, to cause the apparatus to execute the method according to any one of claims 1 to 16 or claims 17 to 32.

67. A chip, comprising a processor, configured to invoke a program from a memory, to cause a device installed with the chip to execute the method according to any one of claims 1 to 16 or claims 17 to 32.

68. A computer-readable storage medium, storing a program, wherein the program causes a computer to execute the method according to any one of claims 1 to 16 or claims 17 to 32.

69. A computer program product, comprising a program, wherein the program causes a computer to execute the method according to any one of claims 1 to 16 or claims 17 to 32.

70. A computer program, wherein the computer program causes a computer to execute the method according to any one of claims 1 to 16 or claims 17 to 32.
